# EUROPÄISCHE PATENTANMELDUNG

(11) **EP 1 752 674 A2**
(43) Veröffentlichungstag der Anmeldung: **14.02.2007**
(21) Anmeldenummer: 06011290.1
(22) Anmeldetag: 31.05.2006
(51) Int. Cl.: F16D 65/092, F16D 65/095

(54) **Bremsbelag mit an die Rückenplatte angeformten Bremsenteilen**

(30) Priorität: 12.08.2005 DE 102005038301
(71) Anmelder: Federal-Mogul Friction Products GmbH, 65520 Bad Camberg (DE)
(72) Erfinder: Emmett, Robert, 56477 Rennerod (DE); Strauss, Wilfried, 69483 Wald-Michelbach (DE)
(74) Vertreter: Becker Kurig Straus

(57) **Zusammenfassung**

Die vorliegende Erfindung offenbart einen Scheibenbremsbelag (2) einer Scheibenbremse, umfassend eine Trägerplatte (6) und mindestens einen Reibbelag (4) mit mindestens einer Reibfläche (5), der dadurch gekennzeichnet ist, dass in der Trägerplatte (6) mindestens ein weiteres Bremsenteil der Scheibenbremse integriert ist.

## Beschreibung

Die vorliegende Erfindung betrifft einen integrierten Bremsbelag und eine Scheibenbremse mit diesem Bremsbelag. Insbesondere betrifft die vorliegende Erfindung Bremsbeläge, die eine Trägerplatte und einen Reibbelag aufweisen.

Scheibenbremsen setzen sich üblicherweise aus einer Bremsscheibe und einem Bremssattel mit mehreren Bremsbelägen zusammen. Scheibenbremsen werden in Kraftfahrzeugen und in Maschinen eingesetzt, um Wellen oder Räder abzubremsen. Die in dem Bremssattel verwendeten Bremsbeläge bestehen üblicherweise aus einem Trägerelement und einem Reibbelag. Die Hauptvorteile von Scheibenbremsen gegenüber heute teilweise noch übliche Trommelbremsen ist das geringere Gewicht, die bessere Wärmeabfuhr und die leichtere Wartung.

Solche Bremsbeläge sind z.B. in der Offenlegungsschrift DE 197 05 836 A1 dargestellt. DE 197 05 836 A1 beschreibt einen Bremsbelag, deren Träger einen Sandwichaufbau aufweist, um Gewicht zu sparen und die mechanischen Eigenschaften des Bremsbelags zu verbessern.

Die Bremsbeläge werden bei hoher Beanspruchung oft durch so genannte Druckverteilerplatten gleichmäßiger belastet, um ungleichmäßigeren Abrieb der Bremsbeläge zu vermeiden. Die Druckverteilerplatten ermöglichen es außerdem, dünnere und damit leichtere Bremsbeläge zu verwenden. Der Einsatz von Druckverteilerplatten und so genannten Niederhaltefedern wird beispielsweise in dem Dokument EP 0 248 385 B1 erläutert. Die EP 0 248 385 B1 verdeuutlicht besonders die Verwendung und die Notwendigkeit von Niederhaltefedern. Die Niederhalter dienen zum Fixieren der Bremsbeläge im Bremsenträger.

Um das Gewicht der Bremsbeläge zu verringern, und das Herstellungsverfahren zu vereinfachen, kann der Bremsbelag und die Trägerplatte aus einem Material hergestellt werden. Dies wird besonders deutlich in der Druckschrift EP 0 745 781 A2 dargestellt. In dieser Schrift werden Bremsbeläge dargestellt, deren Trägerplatte und Reibbelag aus demselben Material aufgebaut sind. Dieses ergibt den Hauptvorteil, dass der gesamte Bremsbelag in einem Arbeitsgang hergestellt werden kann.

Eine Aufgabe der vorliegenden Erfindung ist es, einen Bremsbelag bereitzustellen, der in der Lage ist, die Herstellung von Scheibenbremsen bzw. Bremszangen zu vereinfachen, und einfach und billig und in wenigen Arbeitsgängen herzustellen ist.

Gemäß einem Aspekt der vorliegenden Erfindung wird ein Scheibenbremsbelag einer Scheibenbremse bereitgestellt, der eine Trägerplatte und mindestens einen Reibbelag mit mindestens einer Reibfläche umfasst, wobei in der Trägerplatte mindestens ein weiteres Bremsenteil der Scheibenbremse integriert ist. Das Bremsenteil ist dabei ein Element, das insbesondere an der Bremszange einer Scheibenbremse angeordnet ist.

In einer ersten Ausführungsform ist ein Druckteller einer Scheibenbremse als Bremsenteil in die Trägerplatte integriert beziehungsweise an die Druckplatte angeformt. Dadurch kann einerseits die Biegesteifigkeit der Rückenplatte zusätzlich genutzt werden, um den Bremsbelag biegesteifer auszuführen. Der Vorteil dieser Ausführungsform ist insbesondere daran ersichtlich, dass ein dickeres Bauteil üblicherweise steifer ist als ein Stapel dünnerer Bauteile, da jeweils der Abstand zur neutralen Faser bei dem dickeren Bauteil bzw. größer ist. In dieser Ausführungsform kann das Gesamtgewicht des integrierten Druckverteilers in Bezug auf die Kombination aus Rückenplatte und separatem Druckverteiler reduziert werden. Der Druckteller kann auch nur als auf der Rückseite des Bremsbelags angeordnete Rippen ausgeführt sein.

In einer anderen Ausführungsform ist der Staubschutz eines Bremszylinders in die Trägerplatte integriert. Durch diese Anordnung kann sichergestellt werden, dass der Staubschutz auch bei starker Belastung bei jedem Wechsel der Bremsbeläge ausgetauscht wird, wodurch sichergestellt werden kann, dass ein Bremsversagen aufgrund eines verschlissenen Staubschutzes ausgeschlossen werden kann.

Bevorzugt ist das in die Trägerplatte integrierte Bremsenteil ein Teil eines Bremssattels. Insbesondere bei Bremsbelägen von Schwimmsattelbremsen kann der dem Bremszylinder gegenüberliegende Bremsbelag integral als ein Teil eines zweiteiligen Bremssattels ausgeführt werden. Dadurch kann wie im vorstehend beschriebenen Fall der integrierten Druckverteilerplatte das Gesamtgewicht aus Bremszange und Bremsbelag verringert werden, da die Trägerplatte in die Bremszange bzw. Teil der Bremszange in die Trägerplatte integriert werden kann. Diese Ausführungsform kann als integrierte teilbare Bremszange mit integriertem Bremsblag betrachtet werden.

Vorzugsweise sind Belagführungen in die Trägerplatte des Bremsbelags integriert. Dadurch kann das Gewicht der Bremszange bzw. des Bremssattels weiter verringert werden.

Bevorzugt sind Niederhaltefedern an der Trägerplatte lösbar bzw. nicht lösbar befestigt. Durch diese Ausführungsform können weitere Teile, die üblicherweise verlierbar sind, an dem Bremsblag integriert werden.

Vorteilhaft ist mindestens ein Bremsensensor wie beispielsweise Bremsen- bzw. Bremsbelagsensor für Verschleiß uns/oder Temperatur an der Trägerplatte angeordnet.

Bevorzugt ist die Trägerplatte aus Gussmaterial gefertigt. Es ist ebenfalls vorgesehen, die in die Trägerplatte integrierten oder an die Trägerplatte angeformten Bremsenteile (soweit anwendbar) aus Gussmaterial zu fertigen. Für die Erfindung sind insbesondere Eisenguss, Stahlguss oder Kunststoffspritzguss zur Herstellung der Trägerplatte und der angeformten/integrierten Bremsenteile geeignet.

Vorteilhafterweise ist die Trägerplatte geschmiedet. Schmieden gestattet es insbesondere in der Stahlverarbeitung, höhere Festigkeiten der Trägerplatte und der angeformten Bremsenteile zu erreichen.

Gemäß einem weiteren Aspekt der vorliegenden Erfindung wird eine Scheibenbremse mit Scheibenbremsbelag wie er in der vorstehenden Beschreibung offenbart ist, bereitgestellt. In der erfindungsgemäßen Scheibenbremse sind Elemente der Bremszange auf mindestens einem der Bremsbeläge angeordnet. Die Bremszange einer erfindungsgemäßen Scheibenbremse kann dabei auf Druckverteilerplatten, Schaubschutzelemente, Belagsfiihrungen und dergleichen verzichten.

Figur 1 zeigt einen Querschnitt einer herkömmlichen Scheibenbremse mit einer Aufsicht auf einen herkömmlichen Bremsbelag.

Figur 2 zeigt einen Querschnitt des herkömmlichen Bremsbelags aus Figur 1.

Figur 3 zeigt eine Querschnittsansicht eines erfindungsgemäßen Bremsbelags mit einer integrierten Druckverteilplatte.

Figur 4 zeigt eine Querschnittsansicht eines erfindungsgemäßen Bremsbelags mit einem integrierten Staubschutz für den Bremszylinder.

Figur 5 zeigt eine Seitenansicht eines erfindungsgemäßen Bremsbelags mit integrierten Bremsbelagsführungen.

Figur 6 zeigt eine Querschnittsansicht durch eine erfindungsgemäße Scheibenbremse Bremsbelags mit einer Aufsicht auf einen erfindungsgemäßen Bremsbelag.

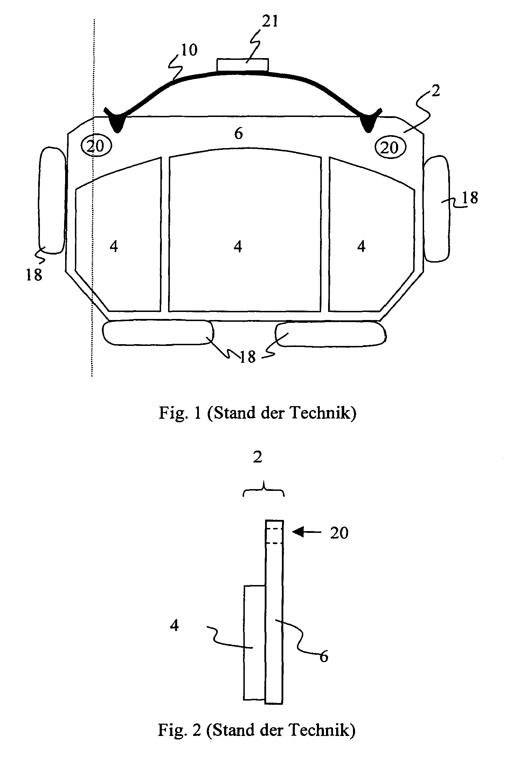

Figur 1 zeigt einen herkömmlichen Bremsbelag. Der Bremsbelag 2 weist eine Trägerplatte 6, und Reibbeläge 4 auf. An der Trägerplatte 6 ist eine Niederhaltefeder 10 angeklemmt. Die Niederhaltefeder 10 ist als eine Blattfeder dargestellt. Die Niederhaltefeder 10 dient dazu, zu verhindern, dass der Bremsbelag 2 bei Bewegungen des Fahrwerks gegen die Führungen 18, 20 des Belagschachts eines Bremssattels schlägt und diese beschädigt. Die in der Zeichnung dargestellte Blattfeder 10 stützt sich an einem Verriegelungselement 21 ab. Die Trägerplatte 6 weist außerdem Aufnahmeelemente 20 für Haltebolzen auf. Der Bremsbelag wird durch Belagsführungen gehalten, die verhindern, dass der Bremsbelag seitlich oder nach unten herausrutschen kann.

Figur 2 zeigt einen Querschnitt des herkömmlichen Bremsbelags aus Figur 1. Es sind Trägerplatte 6, und Reibbeläge 4 klar zu erkennen. Die Niederhaltefeder ist nicht dargestellt. Die Aufnahmeelemente 20 für Haltebolzen in der Trägerplatte 6 sind ebenfalls bei 20 angedeutet.

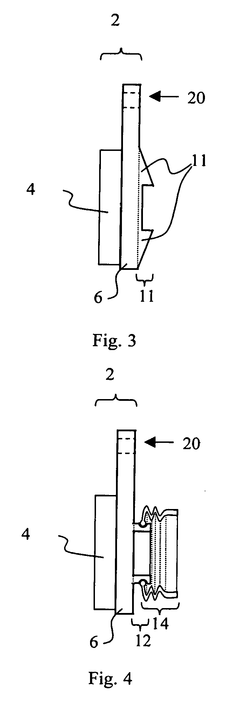

Figur 3 zeigt eine Querschnittsansicht eines erfindungsgemäßen Bremsbelags mit einer integrierten Druckverteilplatte. Die Druckverteilerplatte 11 ist auf der den Reibbelägen 4 abgewandten Seite der Trägerplatte 6 angeordnet. Die integrierte Druckverteilerplatte weist eine Vertiefung für mindestens einen Bremszylinder auf. Wie dargestellt kann die der Trägerplatte gegenüber der herkömmlichen Ausführung an der Stelle leicht erhöht sein, an der der Bremszylinder ansetzt.

Figur 4 zeigt eine Querschnittsansicht eines erfindungsgemäßen Bremsbelags mit einem integrierten Staubschutz für den Bremszylinder. Der Bremsbelag weist einerseits ein Ansatzstück 12 für einen Staubschutz auf, an dem eine Staubschutz-Abdeckung 4 für einen Bremszylinder vormontiert ist. Es wird ebenfalls erwogen, eine Mischform der Figuren 1 und 2 mit einer integrierten Druckverteilerplatte und einem vormontiertem Staubschutz umzusetzen.

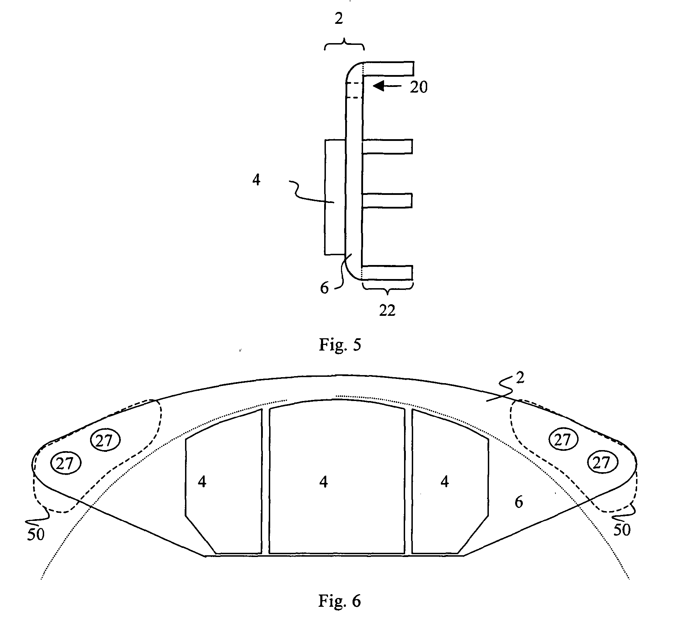

Figur 5 zeigt eine Seitenansicht eines erfindungsgemäßen Bremsbelags mit integrierten Bremsbelagsführungen 22. Diese Ausführungsform eignet sich für die Seite einer Bremszange, an der die Bremszylinder sitzen. Anstelle von Belagsführungen (18 in Figur 1) weist die Bremszange Ausnehmungen auf, in die die Bremsbelagsführungen 22 zur Führung des Bremsbelags greifen können.

Figur 6 zeigt eine Querschnittsansicht durch eine erfindungsgemäße Scheibenbremse Bremsbelags mit einer Aufsicht auf einen erfindungsgemäßen Bremsbelag. Der Bremsbelag ist an den Außenseiten verlängert und weist Durchgangslöcher 27 für Montagebolzen auf. Der Bremsbelag wird einfach mit (nicht gezeigten) Montagebolzen an die (ohne Bremsbelag u-förmige) Bremszange angeschraubt. Die Bremszange ist bzw. die Bereiche der Bremszange an die der Bremsbelag angeschraubt sind durch die Flächen 50 angedeutet. Der in Figur 6 dargestellte Bremsbelag stelle einen integralen Bestandteil der Bremszange dar.

Durch die vorliegende Erfindung ist es ebenfalls möglich, das Gewicht der Bremszange und eventuell der gesamten Scheibenbremse zu verringern. Durch den Einsatz der vorliegenden Erfindung kann das sonst "tote" Gewicht der Trägerplatte ebenfalls für die Funktion und die Stabilität der Bremszange genutzt werden.

Die Scheibenbremse, der Bremssattel und der Bremsbelag können in jedem technischen Gebiet eingesetzt werden, in dem Drehbewegungen verzögert werden sollen, nämlich in sämtlichen automotiven Anwendungen, in Land-, Schienen-, Wasser-, Luftfahrzeugen, in denen Wellen und Räder abgebremst werden müssen. Weitere Anwendungen sind Bremsen für Maschinen, Motoren, Rotoren, Windräder, Fahrgeschäfte und so weiter.

## Patentansprüche

1. Scheibenbremsbelag (2) einer Scheibenbremse, umfassend eine Trägerplatte (6) und mindestens einen Reibbelag (4) mit mindestens einer Reibfläche (5),
**dadurch gekennzeichnet, dass**
in der Trägerplatte (6) mindestens ein weiteres Bremsenteil der Scheibenbremse integriert ist.

2. Scheibenbremsbelag (2) gemäß Anspruch 1, **dadurch gekennzeichnet, dass** das in die Trägerplatte integrierte Bremsenteil ein Druckteller der Scheibenbremse ist.

3. Scheibenbremsbelag (2) gemäß einem der vorstehenden Ansprüche, **dadurch gekennzeichnet, dass** das Bremsenteil ein Staubschutz eines Bremszylinders ist.

4. Scheibenbremsbelag gemäß einem der vorstehenden Ansprüche **dadurch gekennzeichnet**, **dadurch gekennzeichnet, dass** das Bremsenteil ein Teil eines Bremssattels ist.

5. Scheibenbremsbelag (2) gemäß Anspruch 4, **dadurch gekennzeichnet, dass** das die Trägerplatte integrierte Teil eines Bremssattels Belagführungen umfasst.

6. Scheibenbremsbelag (2) gemäß einem der vorstehenden Ansprüche, weiter **dadurch gekennzeichnet, dass** Niederhaltefedern an der Trägerplatte befestigt sind.

7. Scheibenbremsbelag (2) gemäß einem der vorstehenden Ansprüche, **dadurch gekennzeichnet, dass** mindestens ein Bremsensensor an der Trägerplatte angeordnet bzw. befestigt ist.

8. Scheibenbremsbelag (2) gemäß einem der vorstehenden Ansprüche, **dadurch gekennzeichnet, dass** die Trägerplatte Gussmaterial aufweist.

9. Scheibenbremsbelag (2) gemäß einem der vorstehenden Ansprüche, **dadurch gekennzeichnet, dass** die Trägerplatte geschmiedet ist.

10. Scheibenbremse mit Scheibenbremsbelag (2) gemäß einem der vorstehenden Ansprüche 1 bis 9, **dadurch gekennzeichnet, dass** Elemente der Bremszange auf mindestens einem der Bremsbeläge angeordnet sind.
